# EUROPÄISCHE PATENTANMELDUNG

(11) **EP 2 639 338 A2**
(43) Veröffentlichungstag der Anmeldung: **18.09.2013**
(21) Anmeldenummer: 13158553.1
(22) Anmeldetag: 11.03.2013
(51) Int. Cl.: C25B 1/46

(54) **Verfahren zur Elektrolyse von Alkalichloriden mit Sauerstoffverzehrelektroden in Micro-Gap-Anordnung**

(30) Priorität: 15.03.2012 DE 102012204042
(71) Anmelder: Bayer Intellectual Property GmbH, 40789 Monheim (DE)
(72) Erfinder: Bulan, Andreas, 40764 Langenfeld (DE); Kintrup, Jürgen, 51373 Leverkusen (DE)
(74) Vertreter: BIP Patents

(57) **Zusammenfassung**

Es werden Verfahren zur Elektrolyse von Alkalichloriden mit Sauerstoffverzehrelektroden mit besonderen Betriebsparameter für die Inbetriebnahme und Außerbetriebnahme beschrieben, bei deren Einhaltung Schäden an Bestandteilen der Elektrolysezelle vermieden werden.

## Beschreibung

Die Erfindung betrifft ein Verfahren zur Elektrolyse von wässrigen Lösungen aus Alkalichloriden mittels Sauerstoffverzehrelektroden unter Einhaltung bestimmter Betriebsparameter.

Die Erfindung geht aus von an sich bekannten Elektrolyseverfahren zur Elektrolyse von wässrigen Alkalichlorid-Lösungen mittels Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff-entwickelnde Kathode der Elektrolyse (beispielsweise in der ChloralkaliElektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im Folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen konzentrierte Alkalihydroxid-Lösungen und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden können. Weitere gewünschte Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind notwendig. Die Langzeitstabilität und geringe Herstellkosten sind weitere besondere Anforderungen an eine technisch nutzbare Sauerstoffverzehrelektrode.

Ein Problem bei der Anordnung einer SVE in einem Kathodenelement, bei dem zwischen Membran und SVE ein Elektrolytspalt vorhanden ist, ergibt sich dadurch, dass sich auf Seite des Katholyten durch den hydrostatischen Druck ein Druckgefälle über die Höhe der Elektrode ausbildet, dem auf der Gasseite ein über die Höhe gleichbleibender Druck entgegensteht. Die kann dazu führen, dass im unteren Bereich der Elektrode auch die hydrophoben Poren geflutet werden und Flüssigkeit auf die Gasseite gelangt. Andererseits kann bei zu hohem Gasdruck im Oberteil der SVE Flüssigkeit aus den hydrophilen Poren verdrängt werden und Sauerstoff auf die Seite des Katholyten gelangen. Beide Effekte vermindern die Leistungsfähigkeit der SVE. In der Praxis führt dies dazu, dass die Bauhöhe einer SVE auf etwa 30 cm beschränkt ist, sofern nicht weitere Maßnahmen getroffen werden. In technischen Elektrolyseuren werden üblicherweise Elektroden mit einer Höhe von 1 m und höher eingebaut. Für die Realisierung entsprechender Bauhöhen sind diverse Technologien beschrieben.

In WO2001/57290 A1 wird eine Zelle beschrieben, bei welcher die Flüssigkeit von oben nach unten über ein zwischen SVE und Ionenaustauschermembran angebrachtes flächiges poröses Element, einen sogenannten Percolator, in einer Art frei fallendem Flüssigkeitsfilm, kurz Fallfilm genannt, entlang der SVE geführt wird (finite gap Anordnung). Bei dieser Anordnung lastet keine Flüssigkeitssäule auf der Flüssigkeitsseite der SVE, und es baut sich kein hydrostatisches Druckprofil über die Bauhöhe der Zelle auf. Der in WO2001/57290A1 beschriebene Aufbau ist jedoch sehr aufwändig. Um einen gleichmäßigen Laugefluss und eine gleichmäßige Beaufschlagung der SVE mit Katholyt zu gewährleisten, müssen Percolator, Ionenaustauschermembran und SVE sehr genau positioniert werden.

In einer anderen Ausführung wird die Ionenaustauschermembran, die in der Elektrolysezelle den Anoden- vom Kathodenraum trennt, ohne Zwischenraum, in den die Alkalihydroxid-Lösung ein-und abgeführt wird, (Katholytspalt), direkt auf die SVE aufgelegt. Diese Anordnung wird auch als "Zero Gap" Anordnung bezeichnet. Die Zero Gap-Anordnung wird üblicherweise auch in der Brennstoffzellen-Technologie angewandt. Nachteilig hierbei ist, dass die sich bildende Alkalihydroxid-Lösung durch die SVE zur Gasseite geleitet werden muss und anschließend an der SVE nach unten fließt. Hierbei darf es nicht zu einer Verstopfung der Poren in der SVE durch die Alkalihydroxid-Lösung oder zu Auskristallisation von Alkalihydroxid in den Poren kommen. Es hat sich herausgestellt, dass hierbei eine sehr hohe Alkalihydroxid-Konzentration entstehen kann, wobei beschrieben ist, dass die Ionenaustauschermembran bei diesen hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Eine weitere Anordnung, welche gelegentlich auch als "Zero Gap" jedoch präziser formuliert als "Micro Gap" bezeichnet wird, ist in JP3553775 und US6117286A1 beschrieben. In dieser Anordnung befindet sich zwischen der Ionenaustauschermembran und der SVE eine weitere Lage aus einem porösen hydrophilen Material, welche die entstehende Alkalilauge aufgrund ihrer Saugkraft aufnimmt und aus welcher zumindest ein Teil der Lauge nach unten abfließen kann. Die Möglichkeit zum Abfließen der Alkalilauge wird durch die Installation der SVE und das Zelldesign bestimmt. Der Vorteil dieser Anordnung ist, dass die Menge an Lauge, die auf der Rückseite der SVE abwärts fließt, geringer wird. Hierdurch bleibt die der Gasseite zugewandte Seite der SVE (Rückseite) zugänglicher für den Sauerstoff. Weiterhin wird das Porensystem der SVE mit weniger Flüssigkeit belastet, wodurch mehr Porenvolumen für Gastransport zur Verfügung steht. Im Unterschied zu oben beschriebenen Anordnungen in finite gap wird keine wässrige Alkalihydroxid-Lösung (Lauge) durch Aufgabe und Ableitung durch den Spalt zwischen SVE und Ionenaustauschermembran geführt, das in der Mikrospalte befindliche poröse Material nimmt die entstehende Alkalilauge auf und leitet sie in horizontaler oder vertikaler Richtung weiter. Im Folgenden wird die in JP3553775 und US6117286A1 beschriebene Anordnung als "Micro Gap" bezeichnet. Eine leistungsfähige Elektrolysezelle mit einer Micro Gap Konfiguration ist einfacher zu erstellen und zu betreiben als eine Elektrolysezelle in finite gap Anordnung.

Eine Sauerstoffverzehrelektrode besteht typischerweise aus einem Trägerelement, zum Beispiel einer Platte aus porösem Metall oder einem Gewebe aus Metalldrähten, und einer elektrochemisch katalytisch aktiven Beschichtung. Die elektrochemisch aktive Beschichtung ist mikroporös und besteht aus hydrophilen und hydrophoben Bestandteilen. Die hydrophoben Bestandteile erschweren das Durchdringen von Elektrolyt und halten somit die entsprechenden Poren in der SVE für den Transport des Sauerstoffs zu den katalytisch aktiven Zentren frei. Die hydrophilen Bestandteile ermöglichen das Eindringen des Elektrolyten zu den katalytisch aktiven Zentren und den Abtransport der Hydroxid-Ionen aus der SVE. Als hydrophobe Komponente wird in der Regel ein fluorhaltiges Polymer wie Polytetrafluorethylen (PTFE) eingesetzt, welches zudem als polymerer Binder für Partikel des Katalysators dient. Bei Elektroden mit Silber-Katalysator dient beispielsweise das Silber als hydrophile Komponente.

Als elektrochemischer Katalysator für die Reduktion von Sauerstoff sind eine Vielzahl von Verbindungen beschrieben. Praktische Bedeutung als Katalysator für die Reduktion von Sauerstoff in alkalischen Lösungen haben jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Bevorzugtes Trägermaterial ist dabei Kohlenstoff. Die Beständigkeit auf Kohlenstoff geträgerter, auf Platin basierter Elektroden im Dauerbetrieb ist jedoch unzureichend, vermutlich deswegen, weil durch Platin auch die Oxidation des Trägermaterials katalysiert wird. Kohlenstoff begünstigt zudem die unerwünschte Bildung von H₂O₂, welches ebenfalls eine Oxidation bewirkt. Silber hat ebenfalls eine hohe elektrokatalytische Aktivität für die Reduktion von Sauerstoff.

Silber kann in auf Kohlenstoff geträgerter Form und auch als feinteiliges metallisches Silber eingesetzt werden. Obwohl die kohlenstoffgeträgerten Silberkatalysatoren haltbarer sind als die entsprechenden Platin-Katalysatoren, ist auch ihre Langzeitstabilität unter den Betriebsbedingungen in einer Sauerstoffverzehrelektrode, insbesondere beim Einsatz für die Chlor-Alkali-Elektrolyse, beschränkt.

Bei der Herstellung von SVE mit ungeträgertem Silber-Katalysator wird das Silber bevorzugt zumindest teilweise in Form von Silberoxiden eingebracht, welche dann zu metallischem Silber reduziert werden. Die Reduktion erfolgt in der Regel bei der ersten Inbetriebnahme der Elektrolysezelle. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur.

Es wurde beobachtet, dass es bei Abstellen des Elektrolysestroms wieder zur Oxidation des Silberkatalysators kommen kann. Die Oxidation wird durch den Sauerstoff und die Feuchte in der Halbzelle offenbar begünstigt. Durch die Oxidation kann es zu Umlagerungen im Katalysatorgefüge kommen, welche sich negativ auf die Aktivität des Katalysators und damit der Leistungsfähigkeit der SVE auswirken.

Es wurde ferner festgestellt, dass die Leistungsfähigkeit, insbesondere die erforderliche Elektrolysespannung, einer SVE mit Silberkatalysator erheblich von den Bedingungen bei der Inbetriebnahme abhängt. Dies gilt sowohl für die erste Inbetriebnahme einer SVE als auch für die weiteren Inbetriebnahmen nach einem Stillstand. Es ist eine der Aufgaben der vorliegenden Erfindung, spezielle Bedingungen für den Betrieb und insbesondere der In- und Außerbetriebnahme einer SVE mit Silberkatalysator zu finden, welche eine hohe Leistungsfähigkeit der SVE sicherstellen.

Ein weiteres zentrales Element der Elektrolysezelle ist die Ionenaustauscher-Membran. Die Membran ist durchlässig für Kationen und Wasser und weitgehend undurchlässig für Anionen. Die Ionenaustauscher-Membranen in Elektrolysezellen sind einer starken Belastung ausgesetzt: Sie müssen beständig sein gegenüber Chlor auf der Anodenseite und starker alkalischer Belastung auf der Kathodenseite bei Temperaturen um 90°C. Perfluorierte Polymere wie PTFE halten diesen Belastungen üblicherweise stand. Der Ionentransport erfolgt über in diese Polymere einpolymerisierte saure Sulfonat-Gruppen und/oder Carboxylat-Gruppen. Carboxylat-Gruppen zeigen eine höhere Selektivität, die Carboxylatgruppen-haltigen Polymere haben eine geringere Wasseraufnahme und weisen einen höheren elektrischen Widerstand auf als Sulfonat-gruppenhaltige Polymere. In der Regel werden mehrschichtige Membranen eingesetzt mit einer dickeren, Sulfonat-Gruppen enthaltenden Schicht auf der Anodenseite und einer dünneren, Carboxylat-Gruppen enthaltenden Schicht auf der Kathodenseite. Die Membranen sind auf der Kathodenseite oder beidseitig mit einer hydrophilen Schicht versehen. Zur Verbesserung der mechanischen Eigenschaften werden die Membranen durch die Einlage von Geweben oder Vliesen verstärkt, die Verstärkung ist bevorzugt in der Sulfonat-Gruppen enthaltenden Schicht eingearbeitet.

Bedingt durch den komplexen Aufbau sind die Ionenaustauscher-Membranen empfindlich gegenüber Änderungen der sie umgebenden Medien. Durch unterschiedliche molare Konzentrationen können starke osmotische Druckgefälle zwischen Anoden- und Kathodenseite aufgebaut werden. Bei Abnahme der Elektrolytkonzentrationen schwillt die Membran durch verstärkte Wasseraufnahme an. Bei Zunahme der Elektrolytkonzentrationen gibt die Membran Wasser ab und schrumpft hierdurch, im Extremfall kann es durch Wasserentzug zur Ausfällung von Feststoffen in der Membran kommen.

Konzentrationsänderungen können so Störungen und Schäden an der Membran bewirken. Es kann zu einer Delaminierung des Schichtenaufbaus kommen (Blisterbildung), wodurch sich der Stofftransport oder die Selektivität der Membran verschlechtert.

Desweiteren können Löcher (Pinholes) und im Extremfall Risse auftreten, durch welche es zu unerwünschten Vermischungen von Anolyt und Katholyt kommen kann.

In Produktionsanlagen werden wünschenswerterweise Elektrolysezellen über Zeiträume von mehreren Jahren betrieben, ohne dass sie zwischenzeitlich geöffnet werden. Bedingt durch schwankende Abnahmemengen und Störungen in der Elektrolyse vor- oder nachgelagerten Produktionsbereichen müssen Elektrolysezellen in Produktionsanlagen jedoch zwangsläufig wiederholt ab- und wieder angefahren werden.

Bei Abschaltung und Wiederinbetriebnahme der Elektrolysezellen treten Bedingungen auf, welche zu Schädigungen der Zellenelemente führen und deren Lebensdauer beträchtlich verringern können. Es wurden insbesondere oxidative Schäden im Kathodenraum, Schäden an der SVE und Schädigungen der Membran festgestellt.

Es sind aus dem Stand der Technik wenige Betriebsweisen bekannt, mit denen das Risiko einer Schädigung der Elektrolysezellen beim der Inbetriebnahme und Außerbetriebnahme verringert werden kann.

Eine aus der konventionellen Membranelektrolyse bekannte Maßnahme ist die Beibehaltung einer Polarisationsspannung, das heißt, dass beim Beenden der Elektrolyse die Potentialdifferenz nicht auf null heruntergeregelt, sondern in Höhe der Polarisationsspannung aufrecht gehalten wird. Praktischerweise wird eine etwas höhere Spannung als die für die Polarisation benötigte eingestellt, so dass eine konstante geringe Stromdichte resultiert und in geringem Umfang hierdurch eine Elektrolyse erfolgt. Diese Maßnahme alleine reicht jedoch beim Einsatz von SVE nicht aus, um eine oxidative Schädigung von SVE beim der In- bzw. Außerbetriebnahme zu verhindern.

In der Offenlegungsschrift JP 2004-300510 A wird ein Elektrolyseverfahren unter Verwendung einer Micro Gap Anordnung beschrieben, bei dem beim Abschalten der Zelle durch eine Flutung des Gasraums mit Natronlauge die Korrosion im Kathodenraum verhindert werden soll. Die Flutung des Gasraums mit Natronlauge schützt demnach den Kathodenraum vor Korrosion, bietet aber unzureichenden Schutz vor Schädigungen der Elektrode und der Membran beim Außer- und Inbetriebnahme bzw. während des Stillstands.

US 4578159A1 beschreibt für ein Elektrolyseverfahren unter Verwendung einer "Zero Gap" Anordnung, dass durch Spülen des Kathodenraums mit 35%iger Natronlauge vor der Inbetriebnahme der Zelle, oder durch Inbetriebnahme der Zelle mit niedriger Stromdichte und gradueller Erhöhung der Stromdichte Schäden an Membran und Elektrode vermieden werden. Dieses Vorgehen verringert die Gefahr einer Schädigung von Membran und SVE während der Inbetriebnahme, bietet aber keinen Schutz vor Schädigung während der Außerbetriebnahme und des Stillstands.

Aus der Schrift US4364806A1 ist bekannt, dass durch Austausch des Sauerstoffs durch Stickstoff nach Herunterregeln des Elektrolysestroms die Korrosion im Kathodenraum vermindert werden soll. Nach WO2008009661A2 soll die Zugabe eines kleinen Anteils Wasserstoff zum Stickstoff eine Verbesserung des Schutz vor korrosiver Schädigung ergeben. Die genannten Methoden sind jedoch aufwändig insbesondere unter sicherheitstechnischen Aspekten und erfordern die Installation zusätzlicher Einrichtungen für die Stickstoff- und Wasserstoff-Zufuhr. Bei Wiederinbetriebnahme sind die Poren der SVE teilweise mit Stickstoff und/oder Wasserstoff gefüllt, welcher die Zufuhr von Sauerstoff an die reaktiven Zentren behindert. Auch bietet das Verfahren keinen Schutz vor einer Schädigung der Ionenaustauschermembran und stellt hohe sicherheitstechnische Anforderungen zur Vermeidung explosionsfähiger Gasgemische.

Im Final Technical Report "Advanced Chlor-Alkali Technology" von Jerzy Chlistunoff (Los Alamos National Laboratory, DOE Award 03EE-2F/Ed190403, 2004) werden Bedingungen für das temporäre Ab- und Anschalten von Zero Gap Zellen aufgeführt. Beim Abschalten wird nach Unterbrechung des Elektrolysestrom die Sauerstoffzufuhr unterbrochen und durch Stickstoff ersetzt. Die Befeuchtung des Gasstroms wird erhöht um die verbliebene Natronlauge auszuwaschen. Auf der Anodenseite wird die Sole durch heißes Wasser (90°C) ersetzt. Der Vorgang wird wiederholt, bis eine stabile Spannung (Open Circuit Voltage) erreicht ist. Die Zellen wird dann abgekühlt, danach werden die Zufuhr von feuchtem Stickstoff und die Umpumpung des Wassers auf der Anodenseite eingestellt.

Zum erneuten Inbetriebnehmen wird zuerst die Anodenseite mit Sole befüllt, auf der Kathodenseite werden Wasser und Stickstoff eingetragen. Die Zelle wird dann auf 80°C erwärmt. Dann wird die Gaszufuhr auf Sauerstoff umgestellt und eine Polarisationsspannung mit niedrigem Stromfluss angelegt. Anschließend wird die Stromdichte gesteigert und der Druck in der Kathode erhöht, die Temperatur steigt auf 90°C. Sole- und Wasserzufuhr werden in der Folge so angepasst, dass die gewünschten Konzentrationen auf der Anoden- und Kathodenseite erreicht wurden.

Das beschriebene Vorgehen ist sehr aufwändig, insbesondere für technische Elektrolyseverfahren ist ein sehr hoher Aufwand notwendig.

Es bleibt festzustellen, dass die bisher beschriebenen Techniken zur Inbetriebnahme und Außerbetriebnahme einer SVE unvorteilhaft sind und nur unzureichenden Schutz vor Schädigungen bieten.

Die Aufgabe der vorliegenden Erfindung besteht darin, geeignete Betriebsparameter für die Inbetriebnahme und Außerbetriebnahme und die zwischenzeitlichen Stillstände einer Elektrolysezelle für die Chloralkalielektrolyse unter Verwendung einer SVE mit Mico Gap Anordnung und Silberkatalysator als elektrokatalytischer Substanz zu finden, welche einfach durchzuführen sind und bei deren Einhaltung Schäden an Membran, Elektrode und/oder sonstigen Komponenten der Elektrolysezelle vermieden werden.

Die Aufgabe wird dadurch gelöst, dass bei Inbetriebnahme einer Elektrolysezelle mit SVE mit Silberkatalysator und Micro Gap Anordnung der Kathodenraum und die SVE mit einer Alkalilauge mit geringer Kontamination mit Chloridionen benetzt wird. Bei der Außerbetriebnahme einer Elektrolysezelle mit Silberkatalysator und Micro Gap Anordnung wird nach Abschalten der Elektrolysespannung in einem ersten Schritt der Anolyt abgelassen und der Anodenraum gespült und in einem darauf folgenden Schritt noch vorhandener Katholyt abgelassen und der Kathodenraum gespült.

Gegenstand der Erfindung ist ein Verfahren zur Chlor-Alkali Elektrolyse mit einer Elektrolysezelle in einer Micro Gap Anordnung, wobei die Zelle mindestens einen Anodenraum mit Anode und einen Alkalichlorid enthaltenden Anolyt, eine Ionenaustauschermembran, einen Kathodenraum umfassen, der mindestens eine Sauerstoffverzehrelektrode als Kathode, die einen Silber enthaltenden Katalysator aufweist, und ein 0,01 mm bis 2 mm starkes flächiges, von Katholyt durchströmtes poröses Element angeordnet zwischen SVE und Membran und einem Gasraum für Sauerstoff enthaltendes Gas aufweist, **dadurch gekennzeichnet, dass** vor Anlegen der Elektrolysespannung zwischen Anode und Kathode in einem ersten Schritt die Sauerstoffverzehrelektrode auf der Gasseite mit einer wässrigen Alkalihydroxid-Lösung mit einem Gehalt an Chloridionen von höchstens 1000 ppm, bevorzugt höchstens 700 ppm, besonders bevorzugt höchstens 500 ppm benetzt wird und nach anschließender Einleitung des Anolyt in den Anodenraum und eines sauerstoffhaltigen Gases in den Gasraum des Kathodenraums die Elektrolysespannung angelegt wird.

Weiterer Gegenstand der Erfindung ist ein Verfahren zur Chlor-Alkali Elektrolyse mit einer Elektrolysezelle in einer Micro Gap Anordnung, wobei die Zelle mindestens einen Anodenraum mit Anode und einen Alkalichlorid enthaltenden Anolyt, eine Ionenaustauschermembran, einen Kathodenraum, der mindestens eine Sauerstoffverzehrelektrode als Kathode, die einen Silber enthaltenden Katalysator aufweist, und ein 0,01 mm bis 2 mm starkes flächiges, von Katholyt durchströmtes poröses Element angeordnet zwischen SVE und Membran und einen Gasraum für Sauerstoff enthaltendes Gas aufweist, **dadurch gekennzeichnet, dass** am Ende des Elektrolyseprozesses zur Außerbetriebnahme mindestens die nachstehenden Schritte in dieser Abfolge durchgeführt werden:
- Erniedrigung der Elektrolysespannung und Entfernung von so viel Chlor aus dem Anolyten, so dass weniger als 10ppm aktives Chlor im Anolyten vorhanden ist
- Abkühlung des Anolyten auf eine Temperatur unterhalb von 60°C und Entleeren des Anodenraums
   - Bevorzugt ein erneutes Befüllen des Anodenraums mit einer der nachstehenden Flüssigkeiten: verdünnte Alkalichlorid-Lösung mit maximal 4 mol/l oder deionisiertem Wasser, mit anschließendem Entleeren des Anodenraums
   - Befüllung des Kathodenraums mit einer der nachstehenden Flüssigkeiten: verdünnte Alkalihydroxid-Lösung mit maximal 4 mol/l oder deionisiertes Wasser, mit anschließendem Entleeren des Kathodenraums

Diese beiden vorstehenden Varianten des Elektrolyseverfahrens werden in einer bevorzugten Ausführungsform mit einander kombiniert, so dass sowohl die beschriebenen Bedingungen für die Inbetriebnahme der Elektrolyse als auch für die Außerbetriebnahme eingehalten werden. Dies schließt auch die im weiteren beschriebenen bevorzugten Varianten mit ein.

In der Kathode herrschen durch den Sauerstoff stark oxidative Bedingungen, die beim Abschalten nicht mehr durch den Elektrolysestrom kompensiert werden. Nach Abschalten des Elektrolysestroms diffundieren zudem verstärkt Chloridionen durch die Membran in den Kathodenraum. Chloridionen begünstigen Korrosionsprozesse, ferner kann sich bei Oxidation des Silber-Katalysator unlösliches Silberchlorid bilden Es besteht die Gefahr einer Schädigung der Elektrode und auch des gesamten Kathodenraums.

Bei Abschalten der Elektrolysespannung kommt auch der durch den Stromfluss bedingte Stofftransport durch die Membran zum Erliegen. Die Membran verarmt an Wasser, es kann zu Schrumpf und Feststoffausfällungen und in der Folge zu einer Lochbildung kommen, der Durchtritt von Anionen durch die Membran wird erleichtert. Bei Wiederinbetriebnahme wiederum hindert ein zu geringer Wassergehalt den Stofftransport durch die Membran, wodurch es zu Druckerhöhung und Delaminieren an den Grenzschichten kommen kann.

Inhomogenitäten der Wasser- und/oder Ionenverteilung in der Membran und/oder der SVE können bei Wiederinbetriebnahme zu lokalen Spitzen im Strom- und Stofftransport und in der Folge zu Schäden an der Membran bzw. der SVE führen.

Probleme bereitet auch das Auskristallisieren von Alkalichlorid-Salzen auf der Anodenseite. Das starke osmotische Gefälle zwischen Anolyt und Katholyt resultiert in einen Wassertransport vom dem Anoden- in den Kathodenraum. Solange die Elektrolyse in Betrieb ist, steht dem Wassertransport aus dem Anodenraum ein Verlust an Chlorid und Alkali-Ionen entgegen, so dass die Konzentration an Alkali-Chlorid bei gebräuchlichen Elektrolysebedingungen im Anodenraum sinkt. Bei Abstellen der Elektrolyse verbleibt der durch den osmotischen Druck bedingte Wassertransport von dem Anoden- in den Kathodenraum. Die Konzentration im Anolyten steigt über die Sättigungsgrenze. Es kommt zum Auskristallisieren von Alkalichlorid-Salzen, insbesondere im Grenzbereich zur Membran, welche zu Schäden an der Membran führen können.

Mit der Bereitstellung der neuen erfindungsgemäßen Elektrolyseverfahren werden die vorgenannten Probleme und Nachteile der bislang bekannten Verfahren überwunden.

Überraschend wurde nämlich gefunden, dass sich Elektrolyseure enthaltend eine SVE mit Silberkatalysator und Micro Gap Anordnung durch Abfolge dieser vergleichsweise einfacheren Schritte ohne Schädigung wiederholt in Betrieb und außer Betrieb nehmen lassen und auch im Stillstand keinen Schaden nehmen. Das Verfahren eignet sich insbesondere für die Elektrolyse wässriger Natriumchlorid- und Kaliumchlorid-Lösungen.

Die Micro-Gap Konfiguration ist bevorzugt **dadurch gekennzeichnet, dass** zwischen der Ionenaustauscher-Membran und der SVE eine weitere, 0,01 - 2 mm dicke Lage aus einem porösen, hydrophilen Material eingebaut ist, welche die entstehende Alkalilauge aufgrund ihrer Saugkraft aufnimmt und horizontal und vertikal weiterleitet. Die entstehende Alkalilauge kann auch nach unten aus dem mit dem hydrophilen Material gefüllten Micro-Gap abfließen, wenn dies bautechnisch in der Zelle bzw. durch den Zusammenbau der Zelle so gegeben ist. Beispielsweise könnten unten Schlitze angeordnet sein, aus denen die Lauge abfließen kann. Die Betriebsparameter für die Inbetriebnahme und die Außerbetriebnahme einer Elektrolysezelle werden im Folgenden für eine Elektrolysezelle mit einer SVE mit Silberkatalysator und Micro Gap Anordnung beschrieben, die nach der Inbetriebnahme mit einer Alkalichlorid-Konzentration (Anolyt) von 2,5 - 4,0 mol/l und einer sich einstellenden Alkali-Hydroxid-Konzentration (Katholyt) von 8 - 14 mol/l betrieben wird, ohne die Ausführung auf die beschriebene Vorgehensweise zu beschränken zu wollen. Für die Inbetriebnahme bzw. Außerbetriebnahme einer solchen Elektrolysezelle werden folgende Procedere benötigt: vor der Inbetriebnahme wird der Kathodenraum und die SVE mit einer Natronlauge mit geringer Kontamination mit Chloridionen benetzt. Bei der Außerbetriebnahme nach Abschalten der Elektrolysespannung wird in einem ersten Schritt der Anolyt abgelassen und der Anodenraum gespült und in einem darauf folgenden Schritt nach Restentleerung des Kathodenraumes der Kathodenraum gespült wird.

Die Inbetriebnahme einer Elektrolyseeinheit mit Micro Gap Anordnung, einer SVE mit Silber-Katalysator und einer entsprechend dem Stand der Technik gewässerter Ionenaustauschermembran erfolgt in der Weise, dass in einem ersten Schritt der Kathodenraum mit Alkalilauge benetzt wird. Die Benetzung erfolgt zum Beispiel dadurch, dass der Kathodenraum mit Alkalihydroxid-Lösung gefüllt wird und unmittelbar darauf wieder entleert wird. Die Konzentration der zu verwendenden Alkalilauge beträgt zwischen 0,01 und 13,9 mol/l, bevorzugt 0,1 bis 4 mol Alkalihydroxidje Liter. Die Alkalilauge muss möglichst frei sein von Chlorid- und Chlorationen.

Bevorzugt ist ein Verfahren, das dadurch gekennzeichnet ist, dass die vor Anlegen der Elektrolysespannung im Katholytzulauf eingeleitete Alkalihydroxid-Lösung einen Gehalt an Chloridionen von höchstens 1000 ppm, bevorzugt höchstens 700 ppm, besonders bevorzugt höchstens 500 ppm aufweist.

Bevorzugt ist auch ein Verfahren, das dadurch gekennzeichnet ist, dass die vor Anlegen der Elektrolysespannung im Katholytzulauf eingeleitete Alkalihydroxid-Lösung einen Gehalt an Chlorat-Ionen von höchstens 20 ppm, bevorzugt höchstens 10 ppm aufweist.

Die Temperatur der Alkalihydroxid-Lösung für die Benetzung beträgt 10 - 95 °C, bevorzugt 15-60 °C.

Die Verweilzeit der Alkalihydroxid-Lösung im Kathodenraum entspricht wenigstens der Zeit zwischen vollständiger Befüllung und sofortiger Entleerung, dies heißt nach vollständiger Füllung wird die Alkalihydroxid-Lösung aus dem Kathodenraum sofort wieder abgelassen höchstens jedoch 200min.

Nach Ablassen der Alkalihydroxid-Lösung aus dem Kathodenraums wird Sauerstoff zugegeben. Bevorzugt erfolgt das Ablassen der Natronlauge und die Zugabe des Sauerstoffs in der Weise, dass der Sauerstoff die eingefüllte Natronlauge verdrängt. Der Überdruck in der Kathode wird entsprechend der Konfiguration in der Zelle eingestellt, in der Regel in Höhe von 10 bis 100 mbar.

Die Ermittlung der Konzentrationen erfolgt durch Titration oder eine andere, dem Fachmann bekannte Methode.

Für die Benetzung des Kathodenraums wird bevorzugt Alkalihydroxid-Lösung aus regulärer Produktion eingesetzt. Lauge aus Abfahrvorgängen ist vor allem wegen der Kontamination mit Chloridionen für die Benetzung vor Inbetriebnahme der Zelle weniger geeignet.

Nach dem Ablassen der Alkalihydroxid-Lösung aus dem Kathodenraum wird der Anodenraum mit Alkalichlorid-Lösung (Sole) befüllt. Die Sole entspricht den für Membranelektrolysen üblichen Reinheitsanforderungen. Nach Befüllen des Anodenraums wird die Sole entsprechend den üblichen apparativen Gegebenheiten durch Pumpen im Kreislauf durch den Anodenraum geführt. Bei der Umpumpung kann der Anolyt aufgeheizt werden. Die Temperatur der zugefahrenen Sole wird so gewählt, dass sich im Austrag aus dem Anodenraum eine Temperatur von 30 - 95°C einstellt. Die Konzentration des zugeführten Anolyten an Alkalichlorid beträgt zwischen 150 und 330 g /L

Nach Befüllen des Anodenraums und Inbetriebnahme des Anodenkreislaufes wird im nächsten Schritt die Elektrolysespannung angelegt. Bevorzugt erfolgt dies unmittelbar nach Befüllen der Anode und Erreichung einer Temperatur des den Anodenraumen verlassenden Sole von mehr als 60 °C . Es vorteilhaft, wenn nach Befüllen des Anodenraums zumindest die Polarisationsspannung oder die Elektrolysespannung eingeschaltet wird. Die Polarisationsspannung bzw. Elektrolysespannung wird so eingestellt, dass sich eine Stromdichte von 0,01 A/m² bis 40 A/m², bevorzugt 10 bis 25 A/m² einstellt. Die Zeit bei dieser Stromdichte sollte höchstens 30 Minuten, bevorzugt höchstens 20 Minuten betragen.

Insgesamt ist der gesamte Zeitraum für die Inbetriebnahme möglichst kurz zu halten. Die Zeit nach dem Befüllen des Anodenraumes mit Sole und dem Erreichen einer Elektrolyseleistung von > 1 kA/m² sollte insbesondere weniger als 240 Minuten, bevorzugt weniger als 150 Minuten betragen. Bevorzugt wird die Elektrolysestromdichte mit einer Rate von 3 bis 400 A/m² je Minute erhöht. Die Elektrolysezelle wird dann mit den auslegungsgemäßen Parametern betrieben, zum Beispiel mit einer Konzentration von 2,5 - 4,0 mol Alkalichlorid pro Liter im Anodenraum, einer Stromdichte von 2 - 6 kA/m² und einem 50 %igen bis 100%igen Überschuss an Sauerstoff in der Gaszufuhr. Der Sauerstoff der in das Kathodenkompartment eingeleitet wird, wird bevorzugt bei Raumtemperatur (Umgebungstemperatur) mit Wasserdampf gesättigt. Dies kann z.B. hierdurch erfolgen, dass der Sauerstoff vor Einleitung in das Kathodenkompartment, durch ein Wasserbad geleitet wird. Es ist ebenfalls denkbar, dass die Befeuchtung bei höherer Temperatur erfolgt.

Die Natronlaugekonzentration stellt sich im Wesentlichen durch die Wahl der Ionenaustauschermembran und der Alkalichlorid-Konzentration im Anodenraum typischerweise zwischen 8 und 14 mol/L ein. Die Alkalihydroxid-Lösung fließt vorteilhafterweise selbstständig aus dem Kathodenraum heraus.

Das beschriebene Verfahren ist sowohl für die erste Inbetriebnahme von Elektrolyseeinheiten nach dem Einbau einer zuvor noch nicht betriebenen silberhaltigen, insbesondere einer Silberoxid enthaltenden SVE geeignet, als auch für die Wiederinbetriebnahme von Elektrolysezellen nach einer Außerbetriebnahme.

Bei der Außerbetriebnahme der Elektrolysezelle werden folgende Schritte in dieser Abfolge durchgeführt:
- Erniedrigung der Elektrolysespanung und Entfernung von Chlor aus dem Anolyten, so dass weniger als 10ppm aktives Chlor im Anolyten vorhanden ist
- Erniedrigung der Temperatur des Anolyten auf weniger als 60°C (20-60°C) und Entleeren des Anodenraums
- Bevorzugt ein erneutes Befüllen des Anodenraums mit einer der nachstehenden Flüssigkeiten: verdünnte Alkalichlorid-Lösung mit maximal 4 mol/l oder deionisiertes Wasser
- Entleeren des Anodenraums, bevorzugt nach 0,01 bis 200 min
- Befüllung des Kathodenraums mit einer der nachstehenden Flüssigkeiten: verdünnte Alkalihydroxid-Lösung mit 0,01 bis 4 mol/l oder deionisiertes Wasser
- Entleeren des Kathodenraums, bevorzugt nach 0,01 bis 200 min

In einem ersten Schritt wird die Elektrolysespannung heruntergeregelt. Hierbei kann die Spannung auf null heruntergeregelt werden. Bevorzugt wird nach Herunterfahren des Elektrolysestroms eine Spannung beibehalten und diese erst nach Reduktion des Chlorgehalts im Anodenraum auf < 10 mg/l, bevorzugt kleiner als 1 mg/l, abgestellt. Unter Chlorgehalt wird hierbei der Gesamtgehalt an gelöstem Chlor in der Oxidationsstufe 0 und höher verstanden. Die Entfernung des verbliebenen Chlors aus dem Anodenraum erfolgt bevorzugt in der Weise, dass chlorfreier Anolyt zugeführt wird bei gleichzeitigem Abführen von chlorhaltigem Anolyt, oder durch Umpumpen des Anolyt im Anodenkreislaufes bei gleichzeitiger Abtrennung und Abführung von Chlorgas. Die Spannung wird während dieses Vorgangs so eingestellt, dass sich eine Stromdichte von 0,01 bis 40 A/m² bevorzugt 10 bis 25 A/m² einstellt.

Nach Abstellen der Elektrolysespannung wird der Anolyt auf ein Temperatur unterhalb 60°C abgekühlt und anschließend abgelassen.

Im Anschluss wird der Anodenraum gespült. Die Spülung erfolgt mit stark verdünnter Sole mit einem Alkalichlorid-Gehalt von 0,01 bis 4 mol/l, mit Wasser oder, bevorzugt mit deionisiertem Wasser. Die Spülung erfolgt bevorzugt durch einmaliges Befüllen des Anodenraums und unmittelbarem Ablassen der Spülflüssigkeit. Die Spülung kann auch in zwei oder mehr Stufen erfolgen, zum Beispiel so, dass zuerst der Anodenraum mit einer verdünnten Sole mit einem Alkalichlorid Gehalt von 1,5 - 2 mol/l gefüllt und abgelassen wird und dann weiter mit stark verdünnter Sole mit einem NaCl-Gehalt von 0,01 mol/l oder mit deionisiertem Wasser gefüllt und abgelassen wird. Die Spüllösung kann direkt nach dem vollständigen Füllen des Anodenraums wieder abgelassen werden oder bis zu 200min im Anodenraum verweilen und dann abgelassen werden. Nach dem Ablassen verbleibt eine geringe Restmenge an Spüllösung im Anodenraum. Der Anodenraum bleibt hiernach verrohrt oder abgesperrt ohne unmittelbaren Kontakt zur umgebenden Atmosphäre.

Nach Entleeren des Anodenraums wird noch vorhandener Katholyt aus dem Kathodenraum abgelassen, im Anschluss wird der Gasraum der Kathode gespült. Die Spülung erfolgt insbesondere mit stark verdünnter Alkalilauge mit einem Alkalihydroxid-Gehalt von bis 4 mol/l, mit Wasser oder, bevorzugt, mit deionisiertem Wasser. Die Spülung erfolgt bevorzugt durch einmaliges Befüllen des Gasraums und unmittelbarem Ablassen der Spülflüssigkeit. Die Spülung kann auch in zwei oder mehr Stufen erfolgen, zum Beispiel dass zuerst mit einer verdünnten Lauge mit einem Alkalihydroxid-Gehalt 1,05 - 3 mol/l gefüllt und abgelassen wird und dann weiter mit stark verdünnter Lauge mit einem Alkalihydroxid-Gehalt von 0,01 mol/l oder mit deionisiertem Wasser gefüllt und abgelassen wird. Die Spüllösung kann direkt nach dem vollständigen Füllen des Kathodenraumes wieder abgelassen werden oder bis zu 200min im Kathodenraum verweilen und dann abgelassen werden. Nach dem Ablassen verbleibt eine geringe Restmenge an Spüllösung im Kathodenraum. Der Kathodenraum bleibt verrohrt oder abgesperrt ohne unmittelbaren Kontakt zur umgebenden Atmosphäre.

Die Sauerstoffzufuhr kann mit Abschalten der Spannung abgestellt werden. Bevorzugt wird die Sauerstoffzufuhr nach dem Entleeren und Spülen des Kathodenraums abgestellt, die Öffnung für die Sauerstoffzufuhr dient beim Befüllen zur Entlüftung bzw. Entgasung des Kathodenraums.

Nach Entleeren von Anoden- und Kathodenraum kann die Elektrolysezelle mit der feuchten Membran über einen längeren Zeitraum im eingebauten Zustand für eine kurzfristige Inbetriebnahme bereitgehalten werden, ohne dass die Leistungsfähigkeit der Elektrolysezelle beeinträchtigt wird. Bei Stillständen über mehrere Wochen ist es angebracht, zur Stabilisierung in regelmäßigen Abständen den Anodenraum mit verdünnter wässriger Alkalichlorid-Lösung und den Kathodenraum mit verdünnter wässriger Alkalihydroxid-Lösung zu spülen beziehungsweise zu benetzen. Bevorzugt wird im Abstand von 1 - 12 Wochen, besonders bevorzugt im Abstand von 4 - 8 Wochen gespült. Die Konzentration der zum Spülen bzw. Benetzung eingesetzten verdünnten Alkalichlorid-Lösung beträgt 1 - 4,8 mol/L. Die Spüllösung kann direkt nach dem vollständigen Füllen des Anodenraumes wieder abgelassen werden oder bis zu 200min im Anodenraum verweilen und dann abgelassen werden. Die Konzentration der zum Spülen bzw. Benetzung eingesetzten Alkalihydroxid-Lösung beträgt 0,1 bis 10 mol/l. bevorzugt zwischen 1 und 4 mol/l. Die Temperatur der Sole bzw. der Alkalihydroxid-Lösung kann zwischen 10 und 80°C betragen, bevorzugt jedoch 15 - 40°C. Die Spüllösung kann direkt nach dem vollständigen Füllen des Kathodenraumes wieder abgelassen werden oder bis zu 200min im Kathodenraum verweilen und dann abgelassen werden.

Eine weitere Ausführung des Verfahrens besteht darin, die Elektrodenräume, hierunter werden die Kathoden- und Anodenräum der Elektrolysezelle verstanden, mit angefeuchteten Gas zu spülen. Hierzu wird beispielsweise in den Anodenraum mit Wasser gesättigter Stickstoff eingeleitet. Alternativ kann auch Sauerstoff eingeleitet werden. Das Gasvolumenstrom wird so bemessen, dass ein 2 bis 10facher Volumenwechsel erfolgen kann. Der Gasvolumenstrom kann bei einem Gasvolumen von 100 Litern dabei 1 1/h bis 200 l/h bei einer Temperatur von 5 bis 40°C, bevorzugt beträgt die Temperatur des Gases Umgebungstemperatur, d.h. 15 - 25°C betragen. Die Sättigung des Spülgases mit Wasser erfolgt bei der Temperatur des Gases.

Die nach dem vorstehenden Verfahren außer Betrieb genommene Elektrolysezelle wird nach dem zuvor beschriebenen Verfahren wieder in Betrieb genommen. Bei Einhaltung der beschriebenen Verfahrensschritte kann die Elektrolysezelle eine Vielzahl von An - und Abfahrzyklen durchlaufen, ohne dass die Zelle in ihrer Leistung beeinträchtigt wird.

### Beispiele

### Beispiel 1

Eine Pulvermischung, bestehend aus 7 Gew.-% PTFE-Pulver, 88 Gew.-% Silber-I-Oxid und 5 Gew.-% Silberpulver wurde auf ein Netz aus Nickeldrähten aufgebracht und zu einer Sauerstoffverzehrelektrode verpresst. Die Elektrode wurde in eine Elektrolyseeinheit mit einer Fläche von 100cm² mit einer Ionenaustauschermembran von DuPONT Typ N2030 und einem Kohlenstoffgewebe PW3MFBP der Fa. Zoltek mit einer Dicke von 0,3 mm eingebaut. Das Kohlenstoffgewebe war zwischen SVE und Membran angeordnet. Die Elektrolyseeinheit weist im Zusammenbau einen Anodenraum mit Anolytzu- und ablauf, mit einer Anode aus beschichtetem Titan (Beschichtung Ruthenium-Iridiumoxid) einen Kathodenraum mit der SVE als Kathode und mit einem Gasraum für den Sauerstoff und Sauersstoffzu- und ableitungen, einen Flüssigkeitsablauf sowie ein Kohlenstoffgewebe und eine Ionenaustauschermembran, die zwischen Anoden- und Kathodenraum angeordnet sind. SVE, Kohlenstoffgewebe und Ionenaustauschermembran wurden durch einen höheren Druck in der Kathodenkammer als in der Anodenkammer mit einem Druck von ca. 30 mbar auf die Anodenstruktur gedrückt.

Im ersten Schritt wurde der Kathodenraum mit einer 30 Gew.-%igen, 30 °C warmen Natronlauge mit einem Gehalt an Chloridionen von 20 ppm und einem Gehalt an Chlorationen von < 10 ppm gefüllt und anschließend sofort wieder entleert. Beim Entleeren wurde Sauerstoff zugeführt, so dass der entstehende Gasraum mit Sauerstoff gefüllt wurde. Nach Entleerung wurde auf der Kathodenseite ein Überdruck von 30 mbar eingestellt.

Im nächsten Schritt wurde der Anodenraum mit 30°C heißer Sole mit einer Konzentration von 210 g NaCl / l befüllt und der Anodenkreislauf in Betrieb genommen und die Sole auf 70°C aufgeheizt. Unmittelbar nach Erreichen der Temperatur des Anodenkreislaufs wurde die Elektrolysespannung angelegt. Der Elektrolysestrom wurde so eingeregelt, dass nach 5 Minuten eine Stromdichte von 1 kA/m², und nach 30 Minuten eine Stromdichte von 3 kA/m² erreicht wurde. Die Anlage wurde über 3 Tage mit einer Stromdichte von 3 kA/m² und einer Elektrolysespannung von 1,90 - 1,95 V, einer Konzentration der abgeführten Natronlauge von 32 Gew.-% und einer Temperatur in der Elektrolysezelle von 88°C betrieben.

### Beispiel 2

Die Elektrolyseeinheit nach Beispiel 1 wurde nach einer Laufzeit von 3 Tagen wie folgt außer Betrieb genommen:

Der Elektrolysestrom wurde abgestellt. Der Anolyt-Kreislauf wurde entleert. Die Anodenkammer wurde mit deionisiertem Wasser befüllt bis zum Überlauf und wieder entleert.

Im Anschluss wurde verbliebene Flüssigkeit im Kathodenraum abgelassen, die Sauerstoffzufuhr abgestellt und der Kathodenraum mit deionisiertem Wasser bis zum Überlauf befüllt und sofort wieder entleert.

Die Elektrolyseeinheit aus Beispiel 2 wurde 50 h nach der Außerbetriebnahme wie folgt wieder in Betrieb genommen:

Im ersten Schritt wurde der Kathodenraum mit einer 32 Gew.-%igen, 80 °C heißen Natronlauge mit einem Gehalt an Chloridionen von 20 ppm und einem Gehalt an Chlorationen von < 10 ppm gefüllt und anschließend wieder entleert. Beim Entleeren wurde Sauerstoff zugeführt, so dass der entstehende Gasraum mit Sauerstoff gefüllt wurde. Nach Entleerung wurde auf der Kathodenseite ein Überdruck von 30 mbar eingestellt.

Im nächsten Schritt wurde der Anodenraum mit 70° heißer Sole mit einer Konzentration von 210 g NaCl / l befüllt und der Anodenkreislauf in Betrieb genommen. Unmittelbar nach Erreichen eines konstanten Laufs des Anodenkreislaufs wurde die Elektrolysespannung angelegt. Der Elektrolysestrom wurde so eingeregelt, dass nach 5 Minuten ein Elektrolysestrom von 1 kA/m², und nach 30 Minuten ein Elektrolysestrom von 3 kA/m² erreicht wurde bei einer Konzentration der abgeführten Natronlauge von 32 Gew.-% und einer Temperatur in der Elektrolysezelle von 88°C.

Die Elektrolysespannung bei 3 kA/m² betrug 1,8 bis 1,9 V. Die Elektrolyseeinheit zeigte keine Verschlechterung gegenüber der Zeit vor dem Stillstand, es wurde sogar ein Verbesserung um 100mV beobachtet.

## Patentansprüche

1. Verfahren zur Chlor-Alkali Elektrolyse mit einer Elektrolysezelle in einer Micro Gap Anordnung, insbesondere mit einem Abstand von 0,01 mm bis 2 mm zwischen Ionenaustauschermembran und Sauerstoffverzehrelektrode, wobei die Zelle mindestens einen Anodenraum mit Anode und einen Alkalichlorid enthaltenden Anolyt, eine Ionenaustauschermembran, einen Kathodenraum, der mindestens mit eine Sauerstoffverzehrelektrode als Kathode, die einen Silber enthaltenden Katalysator aufweist, und ein 0,01 mm bis 2 mm starkes flächiges, von Katholyt durchströmtes poröses Element angeordnet zwischen SVE und Membran und einen Gasraum für Sauerstoff enthaltendes Gas aufweist, **dadurch gekennzeichnet, dass** vor Anlegen der Elektrolysespannung zwischen Anode und Kathode in einem ersten Schritt die Sauerstoffverzehrelektrode mit einer wässrigen Alkali-Hydroxid-Lösung mit einem Gehalt an Chloridionen von höchstens 1000 ppm, bevorzugt höchstens 700 ppm, besonders bevorzugt höchstens 500 ppm benetzt wird und nach anschließender Einleitung des Anolyts in den Anodenraum und eines sauerstoffhaltigen Gases in den Gasraum des Kathodenraums die Elektrolysespannung angelegt wird.

2. Verfahren nach Anspruch 1, **dadurch gekennzeichnet, dass** die vor Anlegen der Elektrolysespannung zum Benetzen des Kathodenraums verwendete Alkalihydroxid-Lösung einen Gehalt an Chlorationen von höchstens 20 ppm, bevorzugt höchstens 10 ppm aufweist.

3. Verfahren zur Chlor-Alkali Elektrolyse mit einer Elektrolysezelle in einer Micro Gap Anordnung, wobei die Zelle mindestens einen Anodenraum mit Anode und einen Alkalichlorid enthaltenden Anolyt, eine Ionenaustauschermembran, einen Kathodenraum, der mindestens eine Sauerstoffverzehrelektrode als Kathode, die einen Silber enthaltenden Katalysator aufweist, und ein 0,01 mm bis 2 mm starkes flächiges, von Katholyt durchströmtes poröses Element, angeordnet zwischen SVE und Membran und einen Gasraum für Sauerstoff enthaltendes Gas aufweist, **dadurch gekennzeichnet, dass** am Ende des Elektrolyseprozesses zur Außerbetriebnahme mindestens die nachstehenden Schritte in dieser Abfolge durchgeführt werden:
- Erniedrigung der Elektrolysespanung und Entfernung von so viel Chlor aus dem Anolyten, so dass weniger als 10ppm aktives Chlor im Anolyten vorhanden ist
- Abkühlung des Anolyten auf eine Temperatur unterhalb von 60°C und Entleeren des Anodenraums
- Bevorzugt ein erneutes Befüllen des Anodenraums mit einer der nachstehenden Flüssigkeiten: verdünnte Alkalichlorid-Lösung mit maximal 4 mol/l oder deionisiertes Wasser, mit anschließendem Entleeren des Anodenraums
- Befüllung des Kathodenraums mit einer der nachstehenden Flüssigkeiten: verdünnte Alkalihydroxid-Lösung mit maximal 4 mol/l oder deionisiertes Wasser, mit anschließendem Entleeren des Kathodenraums.

4. Verfahren nach Anspruch 3, **dadurch gekennzeichnet, dass** nach Abschalten und Entleerung der Elektrolysezelle wiederholt im Abstand von 1 bis 12 Wochen, bevorzugt 4 bis 8 Wochen, der Anodenraum mit einer verdünnten Alkalichloridlösung mit einem Gehalt von 1,0 bis 4,8 mol/l und der Kathodenraum mit einer verdünnten Alkalihydroxid-Lösung mit einem Gehalt von 0,1 bis 10 mol/l gespült wird.

5. Verfahren nach einem der Ansprüche 1 oder 2, **dadurch gekennzeichnet, dass** es sich um eine nach einem der Ansprüche 3 und 4 außer Betrieb genommene Elektrolysezelle handelt.

6. Verfahren nach einem der Ansprüche 1 - 5, **dadurch gekennzeichnet, dass** es sich bei dem Alkalichlorid um Natriumchlorid oder Kaliumchlorid, bevorzugt um Natriumchlorid handelt.
